# EUROPEAN PATENT APPLICATION

(11) **EP 4 535 563 A1**
(43) Date of publication of application: **09.04.2025**
(21) Application number: 23811626.3
(22) Date of filing: 10.05.2023
(51) Int. Cl.: H01Q 3/24, G01S 7/03

(54) **ELECTRONIC DEVICE**

(30) Priority: 27.05.2022 JP 2022087184
(71) Applicant: Kyocera Corporation, Kyoto-shi, Kyoto 612-8501 (JP)
(72) Inventor: KAWAJI Satoshi, Kyoto-shi, Kyoto 612-8501 (JP); MURAKAMI Youhei, Kyoto-shi, Kyoto 612-8501 (JP); NISHIKIDO Masamitsu, Kyoto-shi, Kyoto 612-8501 (JP)
(74) Representative: Viering, Jentschura & Partner mbB Patent- und Rechtsanwälte
(86) International application number: PCT/JP2023/017617
(87) International publication number: WO 2023/228751

(57) **Abstract**

An electronic device includes a first antenna having a directivity in a first direction, a second antenna having a directivity in a second direction including a component in a direction different from the first direction, and a controller configured to control operation of the first antenna and the second antenna. The controller is configured to perform control so as to be able to switch between a first mode in which either the first antenna or the second antenna is made to operate and a second mode in which both the first antenna and the second antenna are made to operate.

## Description

### CROSS-REFERENCE TO RELATED APPLICATIONS

This application claims priority of Japanese Patent Application No. 2022-87184 filed in Japan on May 27, 2022, the entire disclosure of which is hereby incorporated by reference.

### TECHNICAL FIELD

The present disclosure relates to an electronic device.

### BACKGROUND OF INVENTION

For example, in fields such as industries related to automobiles, technologies for measuring the distance between a host vehicle and a prescribed object are becoming increasingly important. In particular, in recent years, various studies have been conducted on radar (radio detecting and ranging) technologies. In these technologies, the distance to an object is measured by transmitting radio waves, such as millimeter waves, and receiving reflection waves reflected from an object, such as an obstacle. The importance of such technologies for measuring distances so forth is expected to further increase in the future with the development of technologies for assisting drivers in driving and technologies related to automated driving that allow part or all of the driving process to be automated.

In technologies such as radar described above, a variety of possible modes of use have been proposed. For example, Patent Literature 1 teaches that a forward detection radar attached to the front of a vehicle can reduce unwanted reflection from the road surface by orienting the directivity of the antenna upward in order to reduce downward gain. In addition, Patent Literature 2 proposes a configuration in which an antenna aperture is made larger by increasing the spacing between antennas to obtain good angular accuracy for a forward detection radar attached to the front of a vehicle while minimizing redundancy.

### CITATION LIST

### PATENT LITERATURE

Patent Literature 1: Japanese Unexamined Patent Application Publication No. 2005-43080
Patent Literature 2: Japanese Unexamined Patent Application Publication (Translation of PCT Application) No. 2013-504764

### SUMMARY

In an embodiment, an electronic device includes a first antenna, a second antenna, and a controller.

The first antenna has a directivity in a first direction.

The second antenna has a directivity in a second direction including a component in a direction different from the first direction.

The controller is configured to control the first antenna and the second antenna.

The controller is configured to perform control so as to be able to switch between a first mode in which either the first antenna or the second antenna is made to operate and a second mode in which both the first antenna and the second antenna are made to operate.

### BRIEF DESCRIPTION OF THE DRAWINGS

FIG. 1 is a diagram illustrating the configuration of an electronic device according to an embodiment.
FIG. 2 is a diagram illustrating the configuration of the electronic device according to an embodiment.
FIG. 3 is a diagram for explaining directivity of the electronic device according to an embodiment.
FIG. 4 is a diagram for explaining directivity of the electronic device according to an embodiment.
FIG. 5 is a diagram for explaining directivity of the electronic device according to an embodiment.
FIG. 6 is a diagram for explaining a simulation of operation of the electronic device according to an embodiment.
FIG. 7 is a diagram for explaining simulation results of operation of the electronic device according to an embodiment.
FIG. 8 is a diagram illustrating the configuration of an electronic device according to a comparative example of an embodiment.
FIG. 9 is a diagram illustrating the configuration of the electronic device according to the comparative example of an embodiment.

### DESCRIPTION OF EMBODIMENTS

In the present disclosure, an "electronic device" may be a device that is driven by electric power. An electronic device according to an embodiment may include a transmission antenna and a reception antenna. The electronic device according to an embodiment transmits an electromagnetic wave as a transmission wave from the transmission antenna. For example, when a prescribed object is present in the surroundings of the electronic device according to an embodiment, at least part of a transmission wave transmitted from the electronic device will be reflected by the object and become a reflection wave. The reflection wave is then received by the reception antenna of the electronic device, and in this way, the electronic device is able to detect the object. For example, the electronic device according to an embodiment can measure the distance to the prescribed object. The electronic device according to an embodiment can also measure the relative velocity of the prescribed object. The electronic device according to an embodiment can also measure the direction in which the reflection wave from the prescribed object arrives at the electronic device (angle of arrival).

The electronic device according to an embodiment can, for example, be installed in a roadside machine that monitors the operation statuses of vehicles (moving objects), such as automobiles, and detect a prescribed object such as a moving object present in the surroundings of the roadside machine. In addition, the electronic device according to an embodiment can be installed in any device such as a traffic signal and detect a prescribed object such as a moving object present in the surroundings of the device.

The electronic device according to an embodiment may typically be a RADAR (radio detecting and ranging) sensor that transmits and receives radio waves. However, the electronic device according to an embodiment is not limited to a radar sensor. These kind of sensors may include patch antennas, for example. Since technologies such as RADAR are already well known, detailed description thereof may be simplified or omitted as appropriate. The electronic device according to an embodiment may, for example, use an LED or laser as a light source. The electronic device according to an embodiment may, for example, use a photodiode as a light-receiving element. The electronic device according to an embodiment may, for example, use a lens in order to control directivity.

In technologies such as radar described above, convenience in certain modes of use can be improved if narrow and wide directivities can be switched between in addition to being able to switch the direction of a beam of transmission waves or reception waves. The present disclosure provides an electronic device having improved convenience in technologies for detecting objects such as millimeter wave radar. According to an embodiment, an electronic device having improved convenience in technologies for detecting objects, such as millimeter wave radar, can be provided. Before describing an electronic device according to an embodiment, first, an electronic device according to a comparative example of an embodiment will be described.

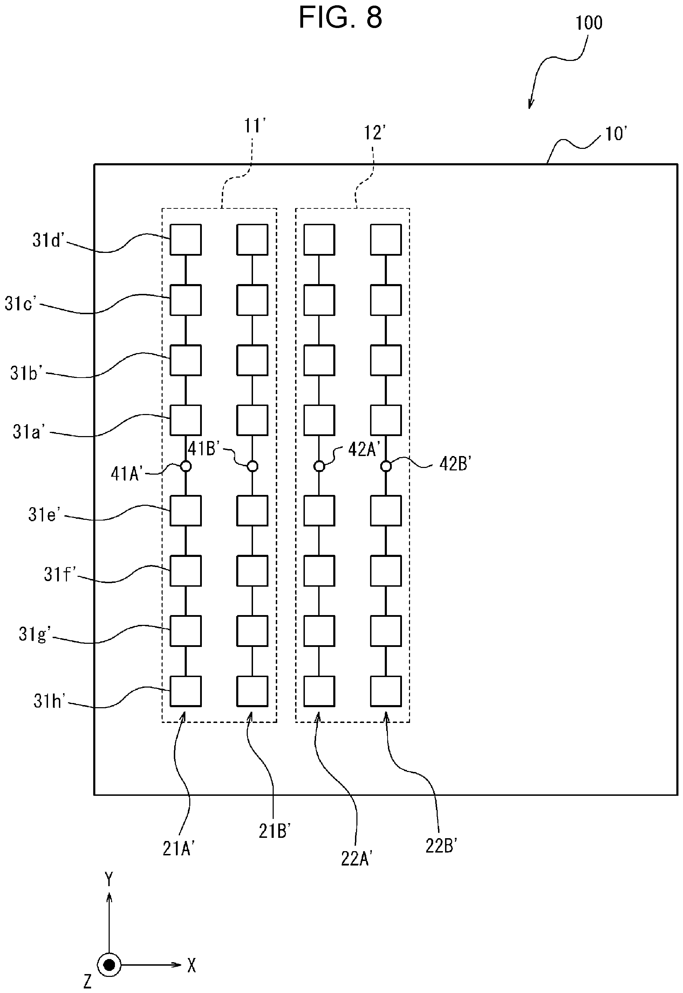

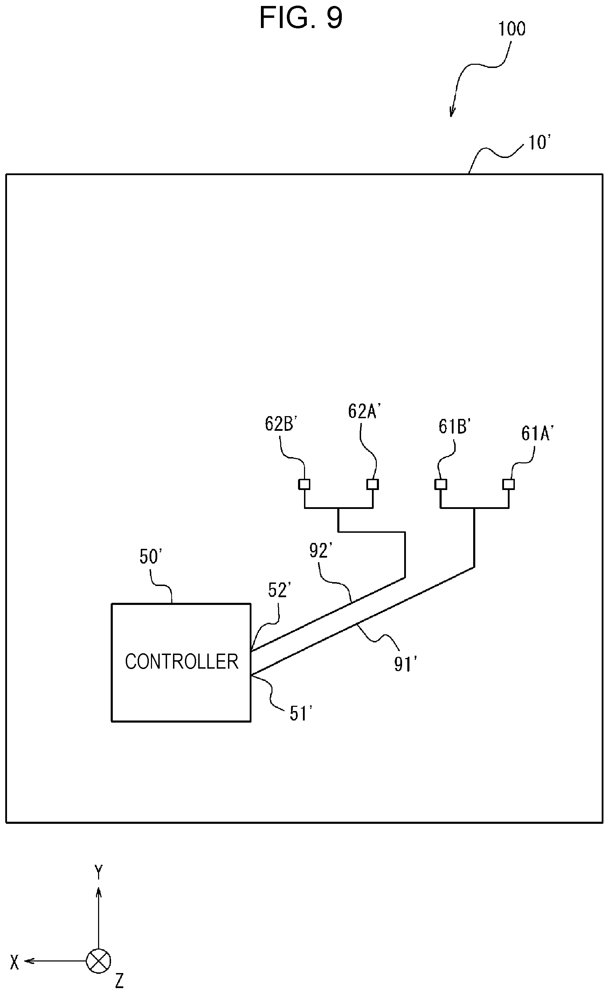

FIGs. 8 and 9 are diagrams illustrating the configuration of an electronic device according to a comparative example of an embodiment. FIG. 8 is a diagram in which an electronic device according to a comparative example of an embodiment is viewed in a prescribed direction. FIG. 9 is a diagram in which the electronic device according to the comparative example of an embodiment is viewed in an opposite direction from the prescribed direction in FIG. 8.

In FIGs. 8 and 9, an X-axis direction may be a horizontal direction or a left-right direction. In FIGs. 8 and 9, a Y-axis direction may be vertical direction or an up-down direction. In particular, in FIGs. 8 and 9, a positive Y-axis direction may be an up direction and a negative Y-axis direction may be a down direction. In FIGs. 8 and 9, a Z-axis direction may be a front-back direction. In particular, in FIGs. 8 and 9, a positive Z-axis direction may be a front direction or a forward direction and a negative Z-axis direction may be a back direction.

As illustrated in FIGs. 8 and 9, in a comparative example of an embodiment, an electronic device 100 may include a substrate 10'. The substrate 10' may be a circuit board used for ordinary electrical circuits or electronic circuits. The surface of the substrate 10' illustrated in FIG. 8 (i.e., the surface of the substrate 10' on the positive Z-axis direction side) is also referred to as a front-side surface or front surface for convenience. The surface of the substrate 10' illustrated in FIG. 9 (i.e., the surface of the substrate 10' on the negative Z-axis direction side) is also referred to as a back-side surface or back surface for convenience. FIGs. 8 and 9 illustrate the functional parts of a transmission system of the electronic device 100, and illustration of the functional parts of a reception system of the electronic device 100 is omitted.

As illustrated in FIG. 8, the electronic device 100 includes a first antenna 11' and a second antenna 12' on the front surface of the substrate 10'. The first antenna 11' and the second antenna 12' may be planar antennas (patch antennas) commonly used in millimeter radar. The first antenna 11' includes a radiating element group 21A' and a radiating element group 21B'. The second antenna 12' includes a radiating element group 22A' and a radiating element group 22B'. A feed point 41A' of the radiating element group 21A' supplies power to the radiating element group 21A'. A feed point 41B' of the radiating element group 21B' supplies power to the radiating element group 21B'. A feed point 42A' of the radiating element group 22A' supplies power to the radiating element group 22A'. A feed point 42B' of the radiating element group 22B' supplies power to the radiating element group 22B'. The feed point 41A', the feed point 41B', the feed point 42A', and the feed point 42B' each supply power from the back-side surface of the substrate 10' illustrated in FIG. 9 to the front-side surface of the substrate 10' illustrated in FIG. 8.

The radiating element group 21A' includes multiple radiating elements 31a' to 31d' arranged in a vertical direction, and multiple radiating elements 31e' to 31h' arranged in a vertical direction. Each of these radiating elements may be composed of a metal material such as copper.

As illustrated in FIG. 8, the radiating elements 31a' to 31d' may be electrically connected to each other by being wired in series with each other. The wiring lines with which the radiating elements 31a' to 31d' are wired in series with each other (wiring lines connecting adjacent radiating elements to each other) may have the same length as each other. For example, each of the wiring lines wiring the radiating elements 31a' to 31d' in series with each other (wiring lines connecting adjacent radiating elements to each other) may have a length the same as a wavelength λ of a transmission wave to be transmitted from the radiating element group 21A'. By making the length of wiring lines connecting adjacent radiating elements to each other and the wavelength λ of the transmission wave the same as each other, the phases of transmission waves transmitted from the radiating elements 31a' to 31d' can be made to match each other.

Similarly, the radiating elements 31e' to 31h' may be electrically connected in series with each other by being wired in series with each other. The wiring lines with which the radiating elements 31e' to 31h' are wired in series with each other (wiring lines connecting adjacent radiating elements to each other) may have the same length as each other. For example, each of the wiring lines wiring the radiating elements 31e' to 31h' in series with each other (wiring lines connecting adjacent radiating elements to each other) may have a length the same as the wavelength λ of a transmission wave to be transmitted from the radiating element group 21A'. By making the length of wiring lines connecting adjacent radiating elements to each other and the wavelength λ of the transmission waves the same as each other, the phases of transmission waves transmitted from the radiating elements 31e' to 31h' can be made to match each other.

The feed point 41A' may be electrically connected to the radiating element 31a' by being wired to the radiating element 31a'. The wiring line connecting the feed point 41A' to the radiating element 31a' may have a length the same as the wavelength λ of transmission waves transmitted from the radiating element group 21A', for example. Similarly, the feed point 41A' may be electrically connected to the radiating element 31e' by being wired to the radiating element 31e'. The wiring line connecting the feed point 41A' to the radiating element 31e' may have a length the same as the wavelength λ of transmission waves transmitted from the radiating element group 21A', for example. With this configuration, the phases of transmission waves transmitted from the radiating element group 21A', in other words, transmission waves transmitted from the radiating elements 31a' to 31d' and the radiating elements 31e' to 31h' can be made to match each other. The radiating element group 21B', the radiating element group 22A', and the radiating element group 22B' may have the same configuration or a similar configuration to the radiating element group 21A'.

As illustrated in FIG. 9, the electronic device 100 includes a controller 50' on the back surface of the substrate 10'. The electronic device 100 further includes a feed point 61A', a feed point 61B', a feed point 62A', and a feed point 62B' on the back surface of the substrate 10'.

The controller 50' can control overall operation of the electronic device 100 including control of each functional part of the electronic device 100. The controller 50' may include at least one processor, such as a CPU (central processing unit) or a DSP (digital signal processor), in order to provide control and processing power to perform various functions. The controller 50' may be implemented collectively in a single processor, in several processors, or in individual processors. The processors may be implemented as a single integrated circuit. An integrated circuit may also be referred to as an IC. Processors may be implemented as multiple integrated circuits and discrete circuits connected so as to be able to communicate with each other. The processors may be realized based on various other known technologies. In an embodiment, the controller 50' may be configured, for example, as a CPU and a program executed by the CPU. The controller 50' may configured as any SoC (system on a chip) or the like. The controller 50' may include any memory as appropriate. In an embodiment, any memory may store various parameters for defining transmission waves to be transmitted from the first antenna 11' and/or the second antenna 12'.

The feed point 61A' illustrated in FIG. 9 is electrically connected to the feed point 41A' illustrated in FIG. 8. The feed point 61B' illustrated in FIG. 9 is electrically connected to the feed point 41B' illustrated in FIG. 8. The feed point 62A' illustrated in FIG. 9 is electrically connected to the feed point 42A' illustrated in FIG. 8. The feed point 62B' illustrated in FIG. 9 is electrically connected to the feed point 42B' illustrated in FIG. 8. The feed point 61A', the feed point 61B', the feed point 62A', and the feed point 62B' may be respectively connected to the feed point 41A', the feed point 41B', the feed point 42A', and the feed point 42B' via through holes drilled in the substrate 10', for example.

As illustrated in FIG. 9, the feed point 61A' and the feed point 61B' may be electrically connected to each other by being wired together. The feed point 62A' and the feed point 62B' may be electrically connected to each other by being wired together. The midpoint of a wiring line connecting the feed point 61A' to the feed point 61B' may be electrically connected to an RF (radio frequency) port 51' of the controller 50' by a wiring line 91'. The midpoint of a wiring line connecting the feed point 62A' to the feed point 62B' may be electrically connected to an RF (radio frequency) port 52' of the controller 50' by a wiring line 92'.

The length of the wiring line 91' may be the same as the length of the wiring line 92'. With this configuration, if transmission waves of the same phase are simultaneously output from the RF port 51' and the RF port 52' of the controller 50', the phases of the transmission waves supplied to the feed point 61A', the feed point 61B ', the feed point 62A', and the feed point 62B' can be made to match each other. Power routed along identical lengths from the RF port 51' and the RF port 52' is supplied to the feed points 41A', 41B', 42A', and 42B' on the substrate surface.

The first antenna 11' and the second antenna 12' of the electronic device 100 may transmit radio waves of a frequency band such as millimeter waves (greater than or equal to 30 GHz) or quasi-millimeter waves (for example, around 20 GHz to 30 GHz). For example, the first antenna 11' and the second antenna 12' of the electronic device 100 may transmit radio waves with a frequency bandwidth of 4 GHz, such as from 77 GHz to 81 GHz. In the electronic device 100, transmission signals for transmitting such transmission waves may be generated by the controller 50', for example.

FMCW radar (frequency-modulated continuous wave radar) is often used to measure distances using millimeter-wave radar. In FMCW radar, the transmission signal is generated by sweeping the frequency of the transmitted radio waves. Therefore, for example, in a millimeter-wave FMCW radar that uses radio waves in the 79 GHz frequency band, the frequency of the radio waves used will have a frequency bandwidth of 4 GHz, for example, from 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands.

With the configuration described above, the first antenna 11' and second antenna 12' of the electronic device 100 can transmit electromagnetic waves for detecting objects.

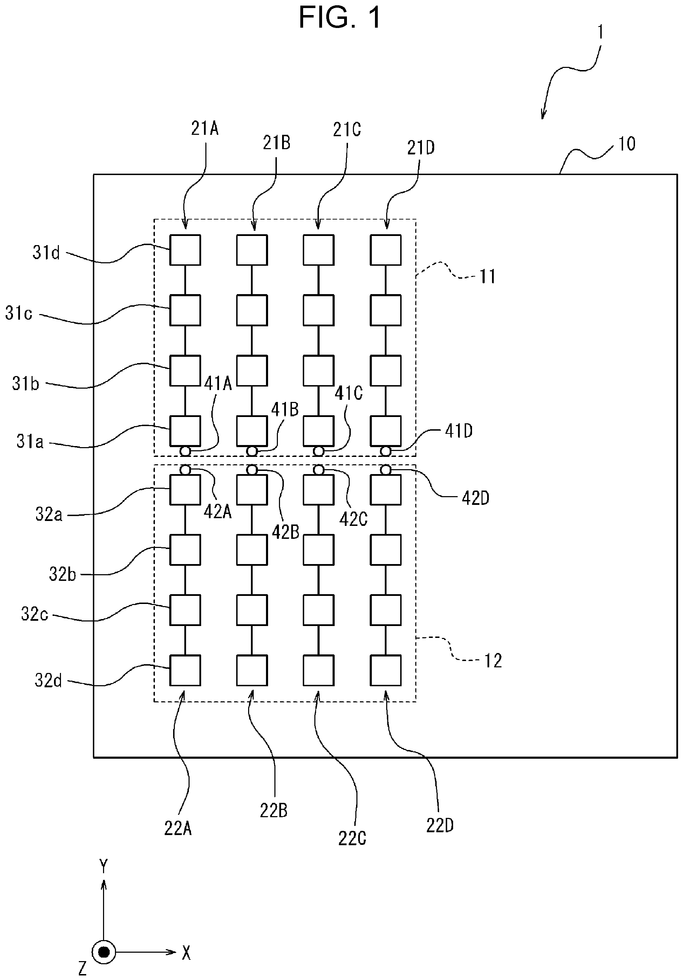

Let us consider a case where transmission waves are transmitted from only the first antenna 11' or the second antenna 12'. For example, a case in which the controller 50' performs control so that transmission waves are transmitted from only the first antenna 11' will be described. As mentioned above, the feed path from each of the radiating elements 31a' to 31d' and the radiating elements 31e' to 31h' to the feed point 41A' is an integer multiple of the wavelength λ of the transmission waves. Therefore, as mentioned above, the transmission waves transmitted from the radiating elements 31a' to 31d' and the radiating elements 31e' to 31h' are in phase with each other. Therefore, the first antenna 11' as a whole has a directivity in the positive direction of the Z-axis illustrated in FIG. 1, i.e., in the forward direction, and forms a transmission wave beam.

In addition, for example, a case in which the controller 50' performs control so that transmission waves are transmitted from only the second antenna 12' will be described. In this case as well, similarly to the first antenna 11', the path from each of the radiating elements 31 to the feed point 41A' or the feed point 42B' is an integer multiple of the wavelength λ of the transmission waves. Therefore, the transmission waves transmitted from each of the radiating elements are in phase with each other. Therefore, the second antenna 12' as a whole has a directivity in the positive direction of the Z-axis illustrated in FIG. 1, i.e., in the forward direction, and forms a transmission wave beam.

Next, let us consider a case where transmission waves are transmitted from both the first antenna 11' and the second antenna 12'. As described above, transmission signals output from the RF port 51' and the RF port 52' are respectively supplied via wiring lines of the same length to the feed point 41A' and the feed point 41B' and the feed point 42A' and the feed point 42B'. Therefore, the first antenna 11' and the second antenna 12' are connected in-phase. Therefore a transmission wave transmitted from the first antenna 11' and a transmission wave transmitted from the second antenna 12' are combined in phase with each other. The first antenna 11' has a directivity in the positive Z-axis direction, i.e., in the forward direction, and the second antenna 12' also has a directivity in positive Z-axis direction, i.e., in the forward direction. Therefore, the combination of transmission waves transmitted from both the first antenna 11' and the second antenna 12' (composite wave) has a directivity in the positive Z-axis direction, i.e., in the forward direction, and a beam of composite waves is formed in the positive Z-axis direction, i.e., in the forward direction.

Thus, the main lobe of the composite wave transmitted from the first antenna 11' and the second antenna 12' is oriented in the positive Z-axis direction, i.e., in the forward direction (0° for both the X axis and Y axis) with respect to the surface of the substrate 10'. In addition, the composite wave transmitted from the first antenna 11' and the second antenna 12' has a larger gain than a transmission wave transmitted from only the first antenna 11' or the second antenna 12'. Therefore, objects can be detected with higher accuracy with a composite wave transmitted from the first antenna 11' and the second antenna 12' than with a transmission wave transmitted from only the first antenna 11' or the second antenna 12'. On the other hand, the directivity in the forward direction of the transmission waves transmitted from the first antenna 11' and/or the second antenna 12' (0° direction in both X-axis direction and Y-axis direction) becomes sharper (narrower) as the number of radiating elements increases, as described below. Therefore, the directivity of transmission waves transmitted from the radiating elements 31a' to 31d' and the radiating elements 3 1e' to 31h' is relatively sharp (narrow).

Detecting objects at relatively far distances using technologies such as millimeter-wave radar requires antennas having high gain. In such cases, the directivity can be oriented in the desired direction by disposing multiple antenna elements according to the required gain and combining the antenna elements in-phase with each other. In this case, the higher the gain of the antenna is designed to be, the greater the number of elements that will be required, and the narrower the directivity will be.

In certain use cases, the electronic device 100 as described above is useful. On the other hand, use cases are anticipated in which functions that are difficult to achieve with the electronic device 100 are desired. For example, a function that can be switched as appropriate in accordance with several use cases may be desired, as in the case of the above-mentioned radar devices installed in or near roadside machines or traffic signals and configured to detect automobiles and the like traveling along a road. For example, a use case may be anticipated in which automobiles, pedestrians, and so on traveling along a road are detected by a device installed at a relatively high position, such as in or near a roadside machine or traffic signal. In such a use case, a function of detecting automobiles and so forth at relatively short distances below the device may be desired. In the aforementioned use cases, detecting automobiles and so forth at locations relatively far from the device may also be desired.

Even if attempts are made to satisfy such desires, the electronic device 100 is unable to change the direction of directivity. Therefore, the directivity is oriented in a horizontal direction toward a location relatively far away from the electronic device 100, and the electronic device 100 cannot be switched so that the directivity is directed downward toward a location relatively close to the electronic device 100. A technique in which the directivity of transmission waves is changed by the controller 50' controlling the phase of the transmission waves transmitted from each radiating element may also be considered (beamforming). However, even if such beamforming is performed, the directivity of transmission waves transmitted from a relatively large number of radiating elements such as the radiating elements 31a' to 31h' will be relatively sharp (narrow). We also expect that the desired detection accuracy might not be achieved even with beam-formed transmission waves from the radiating elements 31a' to 31h' due to the presence of null points and so on. As mentioned above, a millimeter-wave radar installed at a relatively high location, such as in a roadside machine or traffic signal, requires a high antenna gain in a downward direction in order to detect objects that are nearby. However, the directivity of antennas used in combination in phase with each other is relatively narrow, and therefore the gain is assumed to be insufficient to detect objects.

Accordingly, an electronic device according to an embodiment has improved convenience in particular modes of use due to being able to switch between wide and narrow directivities in addition to being able to switch the direction of a beam of transmission waves or reception waves. Such an electronic device will be further described below.

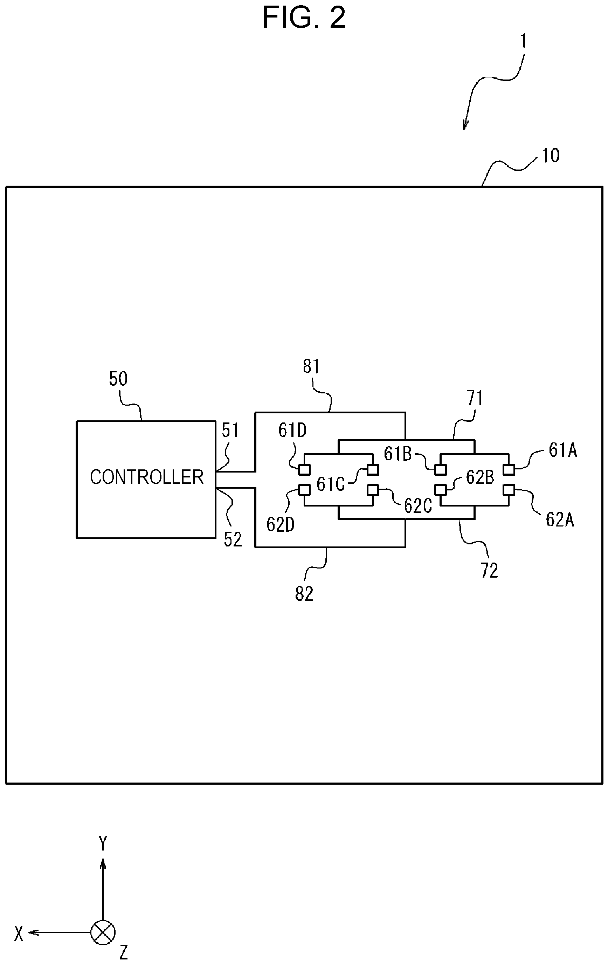

FIGs. 1 and 2 are diagrams illustrating the configuration of an electronic device according to a comparative example of an embodiment. FIG. 1 is a diagram in which an electronic device according to a comparative example of an embodiment is viewed in a prescribed direction. FIG. 2 is a diagram in which the electronic device according to the comparative example of an embodiment is viewed in an opposite direction from the prescribed direction in FIG. 1.

In FIGs. 1 and 2, an X-axis direction may be a horizontal direction or a left-right direction. In FIGs. 1 and 2, a Y-axis direction may be vertical direction or an up-down direction. In particular, in FIGs. 1 and 2, a positive Y-axis direction may be an up direction and a negative Y-axis direction may be a down direction. In FIGs. 1 and 2, a Z-axis direction may be a front-back direction. In particular, in FIGs. 1 and 2, a positive Z-axis direction may be a front direction or a forward direction and a negative Z-axis direction may be a back direction.

As illustrated in FIGs. 1 and 2, in a comparative example of an embodiment, an electronic device 1 may include a substrate 10. The substrate 10 may be a circuit board used for ordinary electrical circuits or electronic circuits. The surface of the substrate 10 illustrated in FIG. 1 (i.e., the surface of the substrate 10 on the positive Z-axis direction side) is also referred to as a front-side surface or front surface for convenience. The surface of the substrate 10 illustrated in FIG. 2 (i.e., the surface of the substrate 10 on the negative Z-axis direction side) is also referred to as a back-side surface or back surface for convenience. FIGs. 1 and 2 illustrate the functional parts of a transmission system of the electronic device 1, and illustration of the functional parts of a reception system of the electronic device 1 are omitted.

As illustrated in FIG. 1, the electronic device 1 includes a first antenna 11 and a second antenna 12 on the front surface of the substrate 10. The first antenna 11 and the second antenna 12 may be planar antennas (patch antennas) commonly used in millimeter radar. As illustrated in FIG. 1, the first antenna 11 may be configured as patch antennas in the upper half of the electronic device 1, and the second antenna 12 may be configured as patch antennas in the lower half of the electronic device 1. The first antenna 11 includes a radiating element group 21A, a radiating element group 21B, a radiating element group 21C, and a radiating element group 21D. The second antenna 12 includes a radiating element group 22A, a radiating element group 22B, a radiating element group 22C, and a radiating element group 22D.

A feed point 41A of the radiating element group 21A supplies power to the radiating element group 21A. A feed point 41B of the radiating element group 21B supplies power to the radiating element group 21B. A feed point 41C of the radiating element group 21C supplies power to the radiating element group 21C. A feed point 41D of the radiating element group 21D supplies power to the radiating element group 21D. A feed point 42A of the radiating element group 22A supplies power to the radiating element group 22A. A feed point 42B of the radiating element group 22B supplies power to the radiating element group 22B. A feed point 42C of the radiating element group 22C supplies power to the radiating element group 22C. A feed point 42D of the radiating element group 22D supplies power to the radiating element group 22D.

The feed point 41A, the feed point 41B, the feed point 41C, and the feed point 41D, and the feed point 42A, the feed point 42B, the feed point 42C, and the feed point 42D each supply power from the back-side surface of the substrate 10 illustrated in FIG. 2 to the front-side surface of the substrate 10 illustrated in FIG. 1.

The radiating element group 21A includes multiple radiating elements 31a to 31d arranged in a vertical direction. The radiating element group 22A includes multiple radiating elements 32a to 32d arranged in a vertical direction. Each of these radiating elements may be composed of a metal material such as copper.

As illustrated in FIG. 1, the radiating elements 31a to 31d may be electrically connected to each other by being wired in series with each other. The wiring lines with which the radiating elements 31a to 31d are wired in series with each other (wiring lines connecting adjacent radiating elements to each other) may have the same length as each other. For example, each of the wiring lines wiring the radiating elements 31a to 31d in series with each other (wiring lines connecting adjacent radiating elements to each other) may have a length that is different from an integer multiple of a wavelength λ of a transmission wave to be transmitted from the radiating element group 21A. For example, each of the wiring lines wiring the radiating elements 31a to 31d in series with each other (wiring lines connecting adjacent radiating elements to each other) may have a length such as (3/4)λ with λ being the wavelength of a transmission wave to be transmitted from the radiating element group 21A. By making the length of wiring lines connecting adjacent radiating elements to each other different from an integer multiple of the wavelength λ of the transmission waves, the phase of transmission waves transmitted from the radiating elements 31a to 31d can be shifted. In this way, in the first antenna 11, multiple radiating elements may be connected to each other with a uniform spacing by wiring lines. In addition, in the first antenna 11, multiple radiating elements may be connected to each other with a spacing different from an integer multiple of the wavelength λ of the transmission wave or reception wave.

Similarly, the radiating elements 32a to 32d may be electrically connected in series with each other by being wired in series with each other. The wiring lines with which the radiating elements 32a to 32d are wired in series with each other (wiring lines connecting adjacent radiating elements to each other) may have the same length as each other. For example, each of the wiring lines wiring the radiating elements 32a to 32d in series with each other (wiring lines connecting adjacent radiating elements to each other) may have a length that is different from an integer multiple of a wavelength λ of a transmission wave to be transmitted from the radiating element group 22A. For example, each of the wiring lines wiring the radiating elements 32a to 32d in series with each other (wiring lines connecting adjacent radiating elements to each other) may have a length such as (3/4)λ with λ being the wavelength of a transmission wave to be transmitted from the radiating element group 22A. By making the length of wiring lines connecting adjacent radiating elements to each other different from an integer multiple of the wavelength λ of the transmission waves, the phase of transmission waves transmitted from the radiating elements 32a to 32d can be shifted. In this way, in the second antenna 12, multiple radiating elements may be connected to each other with a uniform spacing by wiring lines. In addition, in the second antenna 12, multiple radiating elements may be connected to each other with a spacing different from an integer multiple of the wavelength λ of the transmission wave or reception wave.

Thus, the first antenna 11 includes a configuration in which multiple radiating elements (for example, 31a to 31d) are connected to each other in series in a linear manner. In addition, the second antenna 12 includes a configuration in which multiple radiating elements are connected to each other in series in a linear manner parallel to the first antenna 11. In an embodiment, the spacing of the radiating elements of the first antenna 11 and the spacing of the radiating elements of the second antenna 12 may be different from each other.

The feed point 41A may be electrically connected to the radiating element 31a. With this configuration, the phases of transmission waves transmitted from the radiating element group 21A, i.e., from the radiating elements 31a to 31d, can be each shifted by the same amount. The radiating element group 21B, the radiating element group 21C, and the radiating element group 21D may have the same configuration or a similar configuration to the radiating element group 21A. In other words, the feed point 41B may be electrically connected to the radiating elements constituting the radiating element group 21B. The feed point 41C may be electrically connected to the radiating elements constituting the radiating element group 21C. The feed point 41D may be electrically connected to the radiating elements constituting the radiating element group 21D.

The feed point 42A may be electrically connected to the radiating element 32a. With this configuration, the phases of transmission waves transmitted from the radiating element group 22A, i.e., from the radiating elements 32a to 32d, can be each shifted by the same amount. The radiating element group 22B, the radiating element group 22C, and the radiating element group 22D may have the same configuration or a similar configuration to the radiating element group 22A. In other words, the feed point 42B may be electrically connected to the radiating elements constituting the radiating element group 22B. The feed point 42C may be electrically connected to the radiating elements constituting the radiating element group 22C. The feed point 42D may be electrically connected to the radiating elements constituting the radiating element group 22D.

As illustrated in FIG. 2, the electronic device 1 includes a controller 50 on the back surface of the substrate 10. The electronic device 1 further includes a feed point 61A, a feed point 61B, a feed point 61C, and a feed point 61D, and a feed point 62A, a feed point 62B, a feed point 62C, and a feed point 62D on the back surface of the substrate 10.

The controller 50 can control overall operation of the electronic device 1 including control of each functional part of the electronic device 1. In an embodiment, the controller 50 may control operation of the first antenna 11 and the second antenna 12. The controller 50 may include at least one processor, such as a CPU (central processing unit) or a DSP (digital signal processor), in order to provide control and processing power to perform various functions. The controller 50 may be implemented collectively in a single processor, in several processors, or in individual processors. The processors may be implemented as a single integrated circuit. An integrated circuit may also be referred to as an IC. Processors may be implemented as multiple integrated circuits and discrete circuits connected so as to be able to communicate with each other. The processors may be realized based on various other known technologies. In an embodiment, the controller 50 may be configured, for example, as a CPU and a program executed by the CPU. The controller 50 may configured as any SoC (system on a chip) or the like. The controller 50 may include any memory as appropriate. In an embodiment, any memory may store various parameters for defining transmission waves to be transmitted from the first antenna 11 and/or the second antenna 12.

The feed point 61A illustrated in FIG. 2 is electrically connected to the feed point 41A illustrated in FIG. 1. The feed point 61B illustrated in FIG. 2 is electrically connected to the feed point 41B illustrated in FIG. 1. The feed point 61C illustrated in FIG. 2 is electrically connected to the feed point 41C illustrated in FIG. 1. The feed point 61D illustrated in FIG. 2 is electrically connected to the feed point 41D illustrated in FIG. 1. The feed point 62A illustrated in FIG. 2 is electrically connected to the feed point 42A illustrated in FIG. 1. The feed point 62B illustrated in FIG. 2 is electrically connected to the feed point 42B illustrated in FIG. 1. The feed point 62C illustrated in FIG. 2 is electrically connected to the feed point 42C illustrated in FIG. 1. The feed point 62D illustrated in FIG. 2 is electrically connected to the feed point 42D illustrated in FIG. 1. The feed point 61A, the feed point 61B, the feed point 61C, and the feed point 61D may be respectively connected to the feed point 41A, the feed point 41B, the feed point 41C, and the feed point 41D via through holes drilled in the substrate 10, for example. In addition, the feed point 62A, the feed point 62B, the feed point 62C, and the feed point 62D may be respectively connected to the feed point 42A, the feed point 42B, the feed point 42C, and the feed point 42D via through holes drilled in the substrate 10, for example.

As illustrated in FIG. 2, the feed point 61A and the feed point 61B may be electrically connected to each other by being wired together. The feed point 61C and the feed point 61D may be electrically connected to each other by being wired together. The feed point 62A and the feed point 62B may be electrically connected to each other by being wired together. The feed point 62C and the feed point 62D may be electrically connected to each other by being wired together. The midpoint of a wiring line connecting the feed point 61A to the feed point 61B and the midpoint of a wiring line connecting the feed point 61C to the feed point 61D may be electrically connected to each other by a wiring line 71. The midpoint of a wiring line connecting the feed point 62A to the feed point 62B and the midpoint of a wiring line connecting the feed point 62C to the feed point 62D may be electrically connected to each other by a wiring line 72. The midpoint of the wiring line 71 may be electrically connected to an RF (radio frequency) port 51 of the controller 50 by a wiring line 81. The midpoint of the wiring line 72 may be electrically connected to an RF (radio frequency) port 52 of the controller 50 by a wiring line 82.

The length of the wiring line 71 may be the same as the length of the wiring line 72. The length of the wiring line 81 may be the same as the length of the wiring line 82. With this configuration, if transmission waves of the same phase are simultaneously output from the RF port 51 and the RF port 52 of the controller 50, the phases of the transmission waves supplied to the feed points 61A to 61D and the feed point 62A to 62D can be made to match each other. Power routed along identical lengths from the RF port 51 and the RF port 52 is supplied to the feed points 41A to 41D and the feed points 42A to 42D on the substrate surface.

The first antenna 11 and the second antenna 12 of the electronic device 1 may transmit radio waves of a frequency band such as millimeter waves or quasi-millimeter waves. For example, the first antenna 11 and the second antenna 12 of the electronic device 1 may transmit radio waves with a frequency bandwidth of 4 GHz, such as from 77 GHz to 81 GHz. In the electronic device 1, transmission signals for transmitting such transmission waves may be generated by the controller 50, for example.

With the configuration described above, the first antenna 11 and second antenna 12 of the electronic device 1 can transmit electromagnetic waves for detecting objects.

The electronic device 1 illustrated in FIG. 1 includes the same number of radiating elements as the electronic device 100 illustrated in FIG. 8. However, in the electronic device 1 illustrated in FIG. 1, the radiating elements connected to the RF port 51 and the RF port 52 of the controller 50 are different to those in the electronic device 100 illustrated in FIG. 8. In the electronic device 1 illustrated in FIG. 1, the sixteen radiating elements in the upper half constitute the first antenna 11 and the sixteen radiating elements in the lower half constitute the second antenna 12.

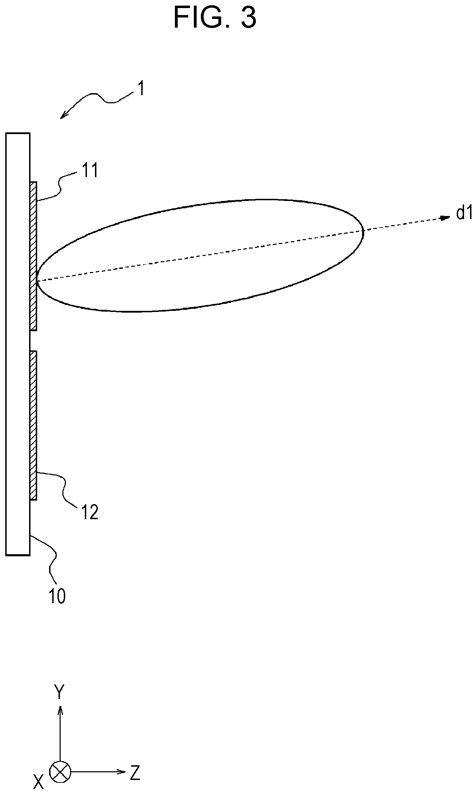

Let us consider a case where transmission waves are transmitted from only the first antenna 11 or the second antenna 12. For example, a case in which the controller 50 performs control so that transmission waves are transmitted from only the first antenna 11 will be described. As described above, in the first antenna 11, the radiating elements constituting the radiating element group 21A etc. may have a length such as (3/4)λ with λ being the wavelength of the transmission wave. By making the length of wiring lines connecting adjacent radiating elements to each other different from an integer multiple of the wavelength λ of the transmission waves, the phase of transmission waves transmitted from the radiating elements 31a to 31d etc. can be shifted. Therefore, the first antenna 11 as a whole has a directivity in a direction d1 illustrated in FIG. 3, for example, and can form a beam of transmission waves. Thus, the first antenna 11 has a directivity in a first direction d1. The first antenna 11 may have a directivity in the first direction d1 due to multiple radiating elements being connected to each other with a spacing different from an integer multiple of the wavelength λ of the transmission waves or reception waves. For example, as illustrated in FIG. 3, the first antenna 11 may have a directivity including a component in a vertically upward direction as the first direction d1.

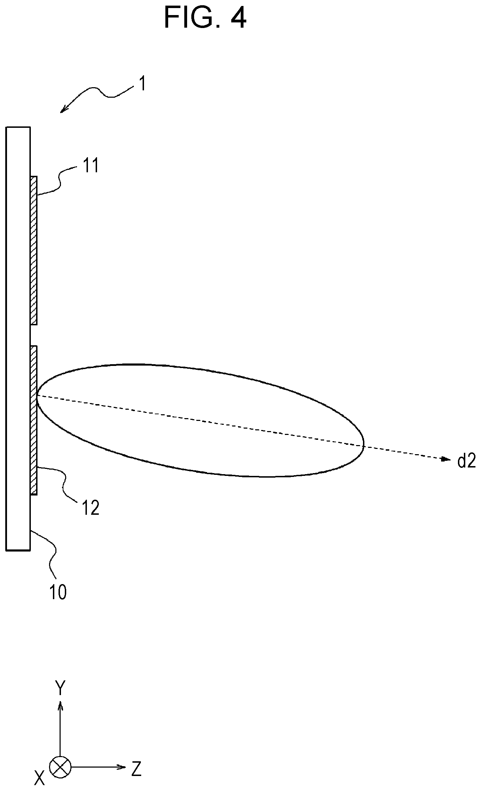

For example, a case in which the controller 50 performs control so that transmission waves are transmitted from only the second antenna 12 will be described. As described above, in the second antenna 12, the radiating elements constituting the radiating element group 22A etc. may have a length such as (3/4)λ with λ being the wavelength of a transmission wave. By making the length of wiring lines connecting adjacent radiating elements to each other different from an integer multiple of the wavelength λ of the transmission waves, the phase of transmission waves transmitted from the radiating elements 32a to 32d etc. can be shifted. Therefore, the second antenna 12 as a whole has a directivity in a direction d2 illustrated in FIG. 4, for example, and can form a beam of transmission waves. Thus, the second antenna 12 has a directivity in a second direction d2 including a component in a direction different from the first direction d1. The second antenna 12 may have a directivity in the second direction d2 due to multiple radiating elements being connected to each other with a spacing different from an integer multiple of the wavelength λ of the transmission waves or reception waves. For example, as illustrated in FIG. 4, the second antenna 12 may have a directivity including a component in a vertically downward direction as the second direction d2.

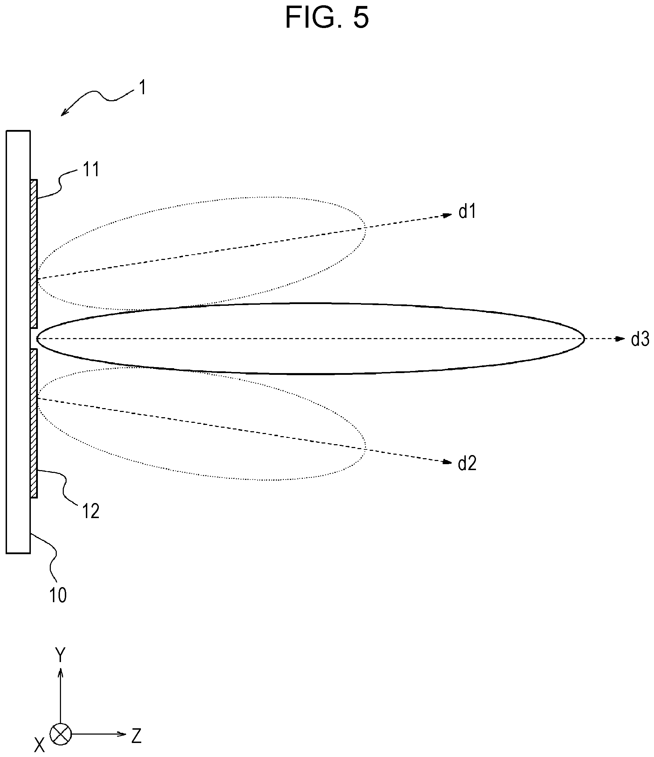

Next, let us consider a case where transmission waves are transmitted from both the first antenna 11 and the second antenna 12. When a transmission wave transmitted from the first antenna 11 and a transmission wave transmitted from the second antenna 12 are combined in phase with each other, the directivity of the composite wave is the combined directional vector of the directivities of the respective antennas. Therefore, the combination of transmission waves transmitted from both the first antenna 11 and the second antenna 12 (composite wave) has a directivity in the positive Z-axis direction, i.e., in the forward direction, as illustrated in FIG. 5, and a beam of composite waves is formed in the positive Z-axis direction, i.e., in the forward direction.

Thus, the main lobe of the composite wave transmitted from the first antenna 11 and the second antenna 12 is oriented in the positive Z-axis direction, i.e., in the forward direction (0° for both the X axis and Y axis) with respect to the surface of the substrate 10. In addition, the composite wave transmitted from the first antenna 11 and the second antenna 12 has a larger gain than a transmission wave transmitted from only the first antenna 11 or the second antenna 12. Therefore, objects can be detected with higher accuracy with a composite wave transmitted from the first antenna 11 and the second antenna 12 than with a transmission wave transmitted from only the first antenna 11 or the second antenna 12. In addition, objects that are farther away can be detected with a composite wave transmitted from the first antenna 11 and the second antenna 12 than with a transmission wave transmitted from only the first antenna 11 or the second antenna 12.

In addition, in the electronic device 1, when a transmission wave is transmitted from only the first antenna 11 or the second antenna 12, the number of radiating elements arranged in the vertical direction of the radiating element group 21A is four as illustrated in FIG. 1. On the other hand, in the electronic device 100, when a transmission wave is transmitted from either the first antenna 11' or the second antenna 12', the number of radiating elements arranged in the vertical direction of the radiating element group 21A' is eight as illustrated in FIG. 8. Therefore, when a transmission wave is transmitted from either the first antenna 11 or the second antenna 12 in the electronic device 1, the directivity of the transmission wave can be made relatively wider compared to the electronic device 100.

In the electronic device 1 according to an embodiment, the controller 50 may have multiple operation modes. In the electronic device 1 according to an embodiment, the controller 50 may perform control so as to be able to switch between multiple operation modes. For example, the controller 50 performs control so as to be able to switch between a first mode and a second mode. Here, the first mode may be a mode in which either the first antenna 11 or the second antenna 12 is made to operate. For example, the controller 50 makes only the second antenna 12 operate as the first mode. In addition, the second mode may be a mode in which both the first antenna 11 and the second antenna 12 are made to operate. In an embodiment, in the second mode in which the controller 50 of the electronic device 1 makes both the first antenna 11 and the second antenna 12 operate, the directivity of radio waves obtained by combining radio waves from both the first antenna 11 and the second antenna 12 may be a third direction d3, which is different from both the first direction d1 and the second direction d2. In this case, the third direction d3 may be a direction perpendicular to an antenna substrate surface.

By operating as described above, the electronic device 1 can transmit a transmission wave having a relatively wide directivity in a downward (diagonally downward) direction, as illustrated in FIG. 4, for example, by operating in the first mode. In addition, by operating as described above, the electronic device 1 can transmit a transmission wave having a relatively narrow directivity in the forward direction (front direction) and a relatively high gain, as illustrated in FIG. 5, for example, by operating in the second mode.

According to an embodiment, the electronic device 1 can be used, for example, in a use case as a device that is installed in or near a roadside machine or a traffic signal and detects automobile and pedestrians etc. traveling along a road. In other words, the electronic device 1 provides a function of detecting automobiles etc. at relatively short distances below the device. According to the electronic device 1, the function of detecting automobiles etc. at positions relatively far away from the device in a direction close to a horizontal direction of the device is also realized.

Thus, in an embodiment, the electronic device 1 can change the direction of directivity. In addition, in an embodiment, the electronic device 1 can switch the operation so as to change between wide and narrow directivities in addition to changing the direction of directivity. Therefore, in an embodiment, the electronic device 1 can have improved convenience in particular modes of use due to being able to switch between wide and narrow directivities in addition to being able to switch the direction of a beam of transmission waves or reception waves.

Hereafter, the effect of changing the number of radiating elements arranged in the vertical direction in the radiating element groups will be further described.

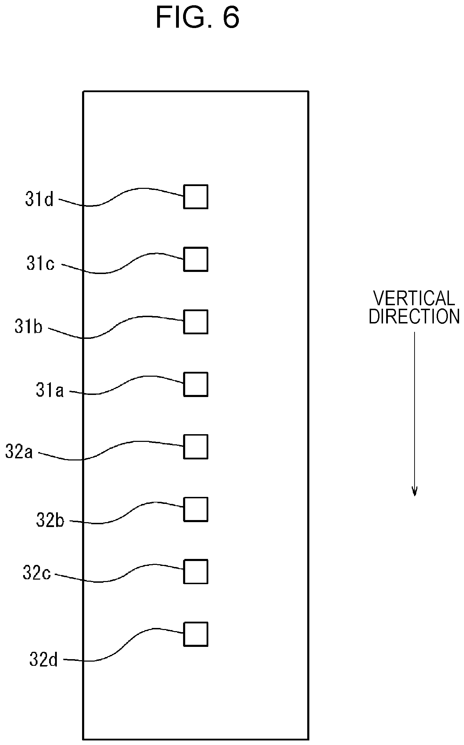

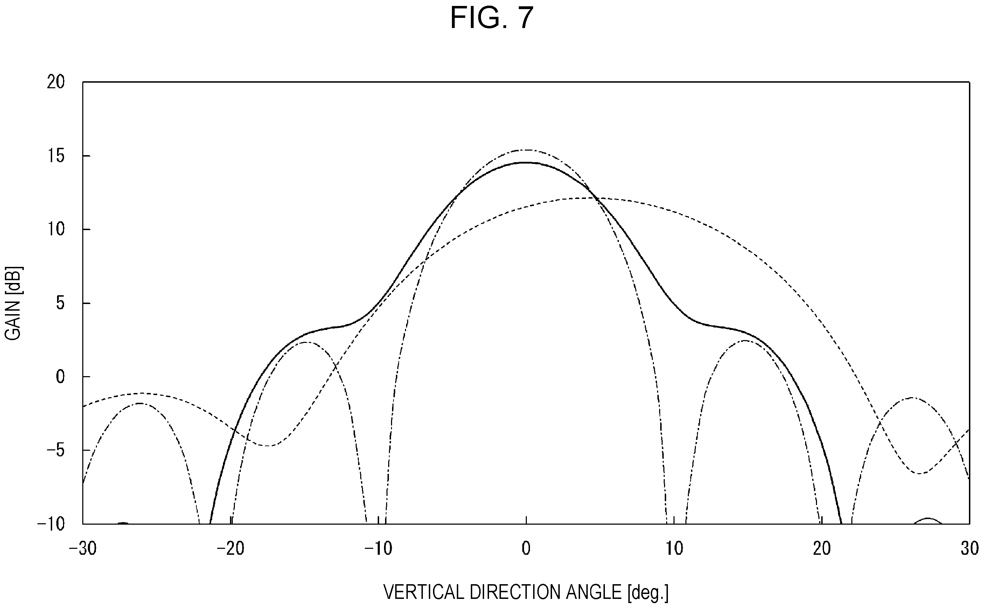

FIG. 6 is a diagram illustrating an example configuration in which radiating elements are arranged in the vertical direction in a radiating element group. FIG. 7 is a diagram illustrating results obtained when simulating operation of an antenna in which the number of radiating elements arranged in the vertical direction is varied in the configuration illustrated in FIG. 6.

In this simulation, a configuration was adopted in which eight radiating elements (radiating elements 31a to 31d and radiating elements 32a to 32d) are arranged in the vertical direction and connected in series with each other, as illustrated in FIG. 6. In addition, in this simulation, the radiating elements illustrated in FIG. 6 were matched at 79 GHz. In this simulation, each radiating element was provided with a feed point, and the amplitude and phase of the transmission wave could be changed individually.

In the simulation results illustrated in FIG. 7, the vertical axis represents antenna gain and the horizontal axis represents the vertical direction angle. The vertical direction represented by the horizontal axis in FIG. 7 may be the downward vertical direction illustrated in FIG. 6.

In FIG. 7, the curve illustrated by a dot-dash line represents results obtained by simulating the gain at each vertical direction angle when the eight radiating elements illustrated in FIG. 6 are used in combination in-phase with each other. As illustrated in FIG. 7, in the curve illustrated by the dot-dash line, side lobes are regularly arrayed outside a main lobe. In the simulation results illustrated in FIG. 6, null points were observed in the vicinity of vertical direction angles of 10° and 20°. In other words, this mode of operation is assumed to be unsuitable for realizing the directivity as illustrated in FIG. 4, for example.

In FIG. 7, the curve illustrated by a dash line represents results obtained by simulating the gain at each vertical direction angle when only the lower four radiating elements are supplied with power and the phase difference is a 20° shift. The mode of operation illustrated in FIG. 4 is assumed as the operation of the first mode performed by the electronic device 1 according to an embodiment. As illustrated in FIG. 7, the curve illustrated by a dash line indicates that the directivity is oriented downward (positive direction along horizontal axis). Furthermore, the curve illustrated in FIG. 7 by the dash line indicates that a smoother directivity is achieved with no null points in the vicinity of vertical direction angles of 10° and 20° compared to the results for when the eight radiating elements are in-phase (curve illustrated by dot-dash line). In other words, this mode of operation is suitable for achieving the directivity as illustrated in FIG. 4, for example.

In FIG. 7, the curve illustrated by a solid line represents the results obtained by simulating the gain at each vertical direction angle when power is supplied to all eight radiating elements with the phase shifted. The mode of operation illustrated in FIG. 5 is assumed as operation of the second mode performed by the electronic device 1 according to an embodiment. As illustrated in FIG. 7, the curve illustrated by the solid line indicates that the peak gain is slightly lower compared to the results for when the eight radiating elements are in-phase (curve illustrated by dot-dash line) because the directivity tilted up and down. However, in the curve illustrated by the solid line in FIG. 7, the main lobe is oriented in the forward direction (vertical direction angle of zero). In other words, this mode of operation is suitable for achieving the directivity as illustrated in FIG. 5, for example.

As described above, in the electronic device 1 according to an embodiment, when detecting a relatively distant object, at least two or more antennas may be used in combination to increase the gain in the forward direction. On the other hand, in the electronic device 1 according to an embodiment, when detecting a relatively close object, out of the multiple antennas, only at least one or more antennas with a downwardly oriented directivity may be used to increase the gain in the downward direction. At this time, only one antenna may be used, i.e., an antenna consisting of a small number of radiating elements, rather than a combination of multiple antennas. By operating in this way, the electronic device 1 according to an embodiment can widen the directivity in the vertical direction.

In the example operation illustrated in FIG. 5, the direction d3 of directivity of a transmission wave transmitted by the electronic device 1 operating in the second mode may be adjusted via the direction d1 of directivity of an operation performed by the first antenna 11 and the direction d2 of directivity of an operation performed by the second antenna 12. In FIG. 5, the direction d3 of directivity using the second mode is illustrated for the case where the direction d3 is parallel to the Z-axis, oriented in the positive Z-axis direction, as an example. However, the direction d3 of directivity using the second mode may have, for example, an angle of depression of around 1° to 2° from the positive Z-axis direction. In this case, the direction d1 of directivity due to the first mode may have, for example, an angle of elevation of around 10° from the positive Z-axis direction. In this case, the direction d2 of directivity due to the first mode may have, for example, an angle of depression of around 11° to 12° from the positive Z-axis direction.

The present disclosure has been described based on the drawings and examples, but note that a variety of variations and amendments may be easily made by one skilled in the art based on the present disclosure. Therefore, note that such variations and amendments are included within the scope of the present disclosure. For example, the functions included in each functional part can be rearranged in a logically consistent manner. Multiple functional parts and so forth may be combined into a single part or divided into multiple parts. Further, each embodiment according to the present disclosure described above does not need to be implemented exactly as described in the embodiment, and may be implemented with features having been combined or omitted as appropriate. A variety of variations and amendments to the content of the present disclosure can be made by one skilled in the art based on the present disclosure. Therefore, such variations and amendments are included in the scope of the present disclosure. For example, in each embodiment, each functional part, each means, each step and so on can be added to other embodiments so long as there are no logical inconsistencies, or can be replaced with each functional part, each means, each step, and so on of other embodiments. In each embodiment, a plurality of each functional part, each means, each step, and so on can be combined into a single functional part, means, or step or divided into multiple functional parts, means, or steps. Each of the above-described embodiments of the present disclosure is not limited to faithful implementation of each of the described embodiments, and may be implemented by combining or omitting some of the features as appropriate.

In the above-described embodiments, a mode has been described in which the electronic device 1 includes a transmission antenna and is configured to transmit a transmission wave. However, in an embodiment, the electronic device 1 may include a reception antenna and be configured to receive a reception wave resulting from reflection of a transmission wave by a prescribed object. In this case as well, for example, the controller 50 may perform control so as to be able to switch between a first mode and a second mode. In other words, the controller 50 may make either the first antenna 11 or the second antenna 12 operate in the first mode and receive a reflection wave. For example, the controller 50 may make only the second antenna 12 operate in the first mode and receive a reflection wave. In addition, the controller 50 may make both the first antenna 11 and the second antenna 12 operate in the second mode and receive a reflection wave. In the above-described embodiments, the number of patch antennas was described as being eight elements in the vertical direction and four rows in the horizontal direction. However, in the present disclosure, the number of patches of the antennas may be changed as appropriate.

The above-described embodiments are not limited to only being implemented as the electronic device 1. For example, the embodiments described above may be implemented as a method of controlling a device such as the electronic device 1. For example, the embodiments described above may be implemented as a control program of a device such as the electronic device 1. In addition, the embodiments described above may be, for example, implemented as a recording medium, i.e., a computer-readable recording medium, on which a program to be executed by a device such as the electronic device 1 is recorded.

### REFERENCE SIGNS

1 electronic device
10 substrate
11 first antenna
12 second antenna
21, 22 serially connected radiating elements
31, 32 radiating element
41, 42 feed point
50 controller
51, 52 transmission port
61, 62 feed point
71, 72, 81, 82 wiring line

## Claims

1. An electronic device comprising:
a first antenna having a directivity in a first direction;
a second antenna having a directivity in a second direction including a component in a direction different from the first direction; and
a controller configured to control operation of the first antenna and the second antenna,
wherein the controller is configured to perform control so as to be able to switch between a first mode in which either the first antenna or the second antenna is made to operate and a second mode in which both the first antenna and the second antenna are made to operate.

2. The electronic device according to claim 1,
wherein the first antenna has the directivity in the first direction due to multiple first radiating elements serially connected to each other in a linear manner being connected to each other with a spacing different from an integer multiple of a wavelength of a transmission wave or a reception wave.

3. The electronic device according to claim 1 or 2,
wherein the second antenna has the directivity in the second direction due to multiple second radiating elements serially connected to each other in a linear manner being connected to each other with a spacing different from an integer multiple of a wavelength of a transmission wave or a reception wave.

4. The electronic device according to claim 3,
wherein at least one of the first radiating elements of the first antenna or the second radiating elements of the second antenna are connected to each other with a regular spacing by wiring lines.

5. The electronic device according to claim 3,
wherein a spacing of the first radiating elements of the first antenna and a spacing of the second radiating elements of the second antenna are different from each other.

6. The electronic device according to claim 1,
wherein the first antenna has a directivity including a component in a vertically upward direction as the first direction.

7. The electronic device according to claim 1,
wherein the second antenna has a directivity including a component in a vertically downward direction as the second direction.

8. The electronic device according to claim 1,
wherein the controller makes only the second antenna operate as the first mode.

9. The electronic device according to claim 1,
wherein in the second mode, the first antenna and the second antenna have a directivity in a third direction different from the first direction and the second direction
